# EUROPEAN PATENT SPECIFICATION

(11) **EP 1 193 850 B1**
(45) Date of publication and mention of the grant of the patent: **10.11.2010**
(21) Application number: 00870207.8
(22) Date of filing: 22.09.2000
(51) Int. Cl.: H02M 3/157, H02M 3/156

(54) **Device and method for generating a high voltage**
Verfahren und Vorrichtung zur Hochspannungserzeugung
Dispositif et procédé de génération d'une haute tension

(43) Date of publication of application: 03.04.2002
(73) Proprietor: IMEC, 3001 Leuven (BE); Universiteit Gent, 9000 Gent (BE)
(72) Inventor: Doutreloigne, Jan, 9000 Gent (BE)
(74) Representative: Van Malderen, Joëlle

(56) References cited:
- EP-A- 0 944 159
- US-A- 5 627 460
- US-A- 5 901 052

## Description

### Field of the invention

The present invention is related to a device in which a variable high voltage can be generated. The present invention is equally related to the use of such a device and to a method of generating a high voltage.

### State of the art

Document US 5627460A discloses a high voltage generating device comprising a high voltage generating component having as input a voltage signal constructed at least by comparing a (fixed) reference current and a feedback current ((Ir)(Ifb)(Ud)), said feedback current being related to the output voltage generated by said high voltage generating component ((Ufb)(Ifb)).

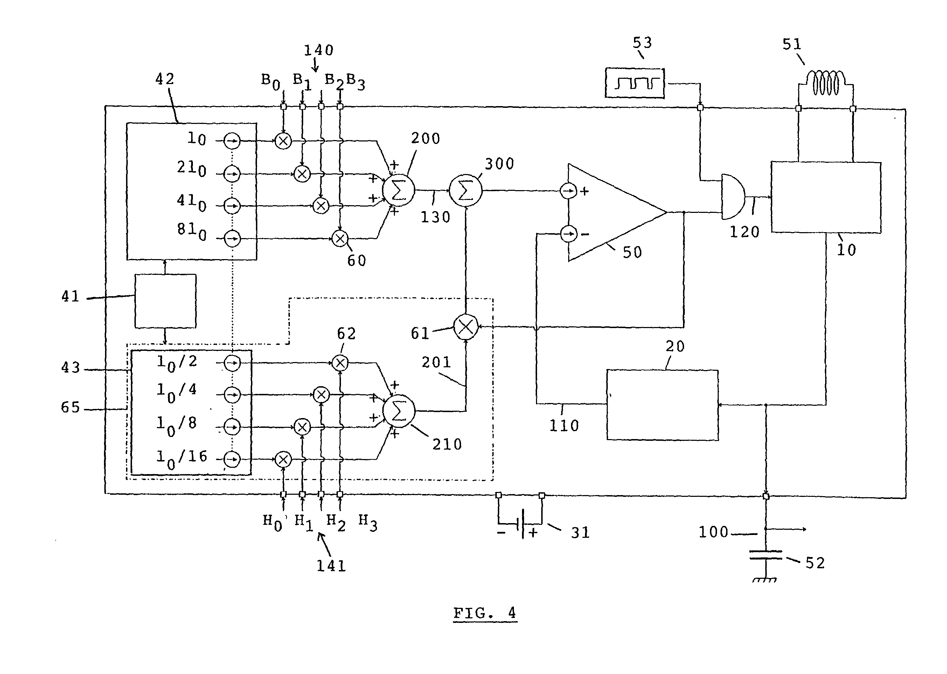

Document US 5901052A discloses a high voltage generating device comprising a high voltage generating component having as input a voltage signal constructed at least by comparing a reference current and a feedback current (Fig.4:reference current generated in (6) and feedback current measured with (1)(9)(19) are compared in (5)), said feedback current being related to the output voltage generated by said high voltage generating component (feedback current being the inductor current during (1) in ON state feeding the output during (1) OFF state, therefore being related to the output voltage).

Document US 5079498A is describing a circuit providing a digital control of current in an inductive load. A switching circuit generates a square wave PWM voltage drive to the load, and the current is sensed by sensor. This current is fed back as signal, which is compared with two zone boundary signals. The switching state is changed between ON and OFF accordingly.

Document US 5943227A is describing a monolithic programmable dc-dc converter controller integrated circuit with a high speed synchronous controller and a 4-bit programmable DAC to provide an operating voltage to an external device such as a microprocessor in response to a code programmed in the external device. The 4-bit programmable DAC outputs a signal which is combined with a precise reference voltage to provide voltages to the external device in increments of 100 millivolts.

Document TPS5210 of Texas Instruments is describing a programmable synchronous-buck regulator controller.

However, none of these documents are able to provide a high voltage generating device for generating a selectable output voltage.

### Aims of the invention

The present invention aims to provide a high voltage generating device, which does not suffer from the disadvantages of existing devices.

### Summary of the invention

The present invention is related to a high voltage generating device for generating a selectable output voltage as defined by claim 1 and a method for its operation as defined in claim 12. Further advantageous embodiments are defined by the dependent claims 2-11.

### Short description of the drawings

Fig. 1 represents a general overview of the different elements constituting the high-voltage generating device according to the invention.

Fig. 2 represents a basic block diagram of the high-voltage generating device according to a preferred embodiment of the invention.

Fig. 3 is a schematic representation of the circuit in the high voltage charge pump.

Fig. 4 represents a block diagram of a high-voltage generator with hysteresis according to the invention.

Fig. 5 gives the variations of the output voltage as a function of the B-code for the high-voltage generator with hysteresis according to the invention as presented on Fig. 4.

Fig. 6 gives the variations of the output voltage as a function of the B-code for the high-voltage generator without hysteresis according to the invention as presented on Fig. 2.

Fig. 7 gives the variations of the output voltage ripple as a function of the binary H-code for the high-voltage generator with hysteresis according to the invention as presented on Fig. 4.

Fig. 8 gives the variations of the output voltage as a function of the battery supply voltage in the generator according to the invention, when said battery supply voltage varies in the range 2.25 V-5 V.

Fig. 9 gives the variations of the output voltage as a function of the battery supply voltage in the generator according to the invention, when said battery supply voltage varies in the range 2.5 V-3.5 V.

Fig. 10 gives the variations of the output voltage as a function of the output current in the generator according to the invention, when said output current varies in the range 0-900 µA.

Fig. 11 is a detail of Fig.10 in the range 0-500 µA.

Fig. 12 gives the variations of the power efficiency as a function of the output voltage for the high-voltage generator without hysteresis according to the invention and as presented on Fig. 2.

### Detailed description of the invention

A high voltage generating device according to the present invention is characterised by the fact that it uses current control of the high voltage generating component, e.g. a charge pump, within the device in combination with feedback control from the output voltage to the current control circuitry.

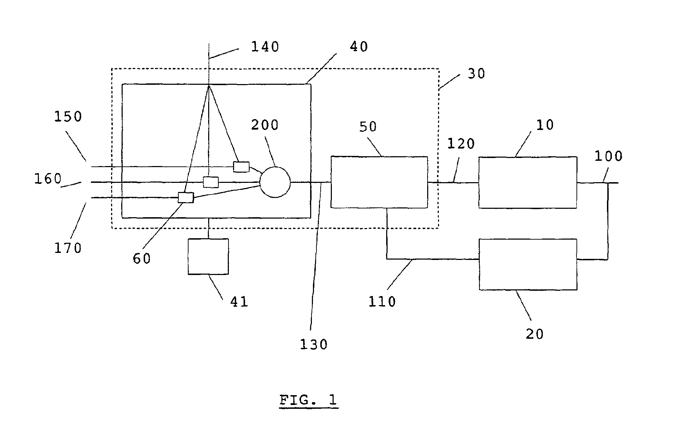

Figure 1 shows a schematic view of a device according to the present invention. In this figure 1, a high voltage generating device is thus presented with a high voltage generating component 10 having as input a voltage signal 120 constructed by a current control circuit 30 having as input at least one feedback current 110 which is related to the output voltage 100. Alternatively said high voltage generating device can be described as comprising a high voltage generating component 10 having as input a voltage signal 120 constructed at least by comparing a reference current 130 and a feedback current 110 being related to the output voltage 100.

Said device further comprises a voltage to current convertor 20, generating said feedback current 110 on the basis of the output voltage 100.

Said device further comprises a current comparator 50, generating the voltage signal 120 by comparing the reference current 130 and the feedback current 110.

The current control of the high voltage generating component according to the invention enables a flexible operation of the device, resulting in an easy selection of the required output voltage. A high voltage generating device with variable output voltage (within a certain range) is obtained.

The variability of the output voltage 100 is obtained by introducing a reference current 130 which can be easily modified by constructing it as a combination of a plurality of basic currents (150, 160, 170), preferably a linear combination. This means that the basic currents are added together in a summing operation after being multiplied with a certain constant. The basic currents are selected to be currents with a substantially different value. Said multiplication constant is preferably one or zero, which enables the use of a digital input. The high voltage generating device comprises a circuit 40 wherein each of the basic currents (having substantially different values) is selected to be part of said combination based on a digital input 140 and a voltage reference 41. Within said circuit 40 multiplying circuitry 60 and a current combination part 200 is found. Said multiplying can be adapted such that it takes into account the digital nature of the signals, thus the fact that either selection (in case of a 1) or non-selection (in case of a 0) of the basic current under consideration must be realised.

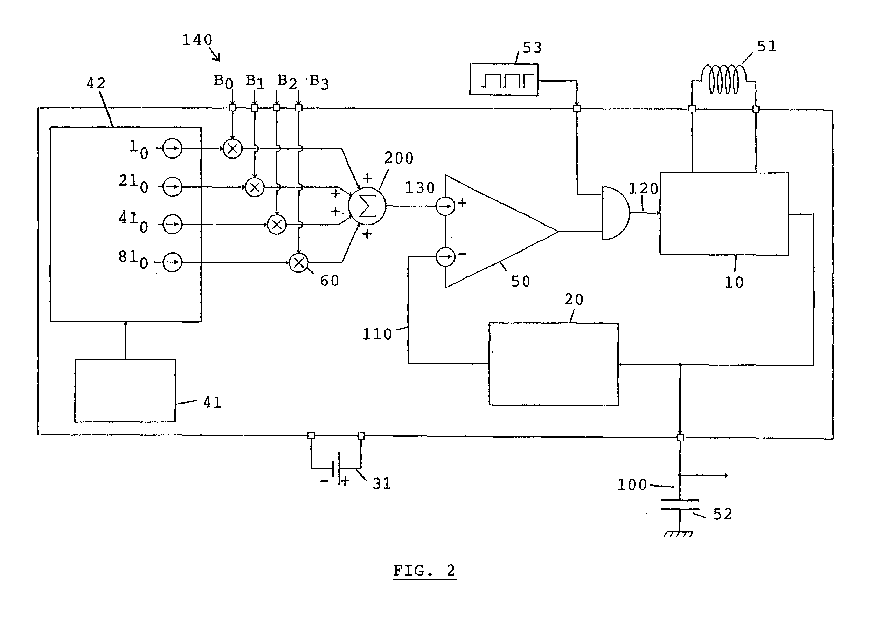

A block diagram of a preferred embodiment of the high voltage generator or high voltage generating device can be seen in Fig. 2. The device is driven by a supply voltage 31, having a voltage between 2.5V and 5V. First, an internal reference voltage 41 is converted by a voltage to current converter 42 into 4 current sources I₀, 2I₀, 4I₀ and 8I₀, further denoted basic currents. These current sources are multiplied by the logical values (0 or 1) of the 4 input control bits B₀ to B₃, together defining the input signal 140, after which they are summed up, thus defining a reference current 130, which can have 1 out of 16 linearly distributed current levels. This reference current is then compared to the feedback current 110, which is proportional to the high voltage generator's output voltage 100. According to the difference between these 2 current levels, a high-efficiency charge pump 10 is activated or disabled in order to compensate for the difference. In this way, 1 out of 16 linearly distributed voltage levels is obtained at the generator's output terminal. By choosing appropriate values of the current source I₀ and the transconductance of the voltage-to-current converter 20 connected to the output, a linear distribution of the output voltages in a range, for instance (but not limited thereto), a range from 0 to 100V is obtained.

In the embodiment of the invention of figure 2, the high voltage generator requires an inductor 51, which is an essential component in the case of the charge pump and a capacitor 52 at the output. This capacitor is not essential for the generator's operation, but allows much smoother output voltages to be obtained. Also the clock pulses for the charge pump have to be applied externally by an external oscillator 53. In still another embodiment, high-voltage generators are designed and fabricated in a 100V c07 I²T technology. Said components (inductors, capacitors) can either be mounted external to the chip, e.g on the chip board or in the package of the chip with a multichip module technology or even internally on the chip.

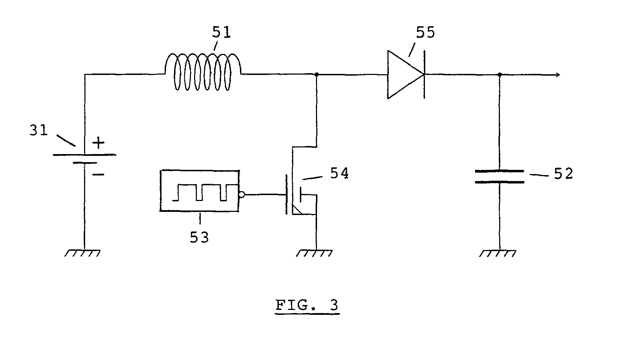

In general any high voltage generating component can be used. In the example of Figure 2 a high voltage generating charge pump is used. The principle of operation of the charge pump can easily be understood on the basis of the circuit diagram of figure 3. On the high-level of a pulse from the external oscillator 53, the internal high-voltage NDMOS transistor 54 is switched on and behaves ideally as a short-circuit between its source and drain electrodes. Consequently, the inductor 51 receives the battery power supply voltage 31 and its current increases linearly in time. On the high-to-low transition of the clock pulse, the transistor 54 is switched off and the inductor current is forced to flow through the diode 55.

Assuming that the generator's output voltage is already higher than the battery voltage, the current through the inductor will decrease in time (as there is inversion of the polarity of the voltage drop across the inductor) until it reaches the 0 Amps level. At that moment, the diode 55 becomes reverse-biased (as current inversion is not possible in a semiconductor diode) and the inductor current will remain at a constant 0 Amps level.

It is important to note that during the short conduction period of the diode 55, an amount of charge is injected by the inductor into the generator's output node, which is normally connected to a capacitor 52 for storing the charge. So, this circuit is capable of "pumping" periodically an amount of charge into the output capacitor 52, no matter how high the output voltage is with respect to the battery voltage. Of course, there is also a constant load current which slowly discharges the output capacitor. Therefore, the periodically injected amount of charge has to be large enough to compensate for this continuous loss of charge. If this condition is fulfilled, then the feedback control circuitry on the generator chip has to provide a self-regulating on/off control of the oscillator in order to maintain the output voltage at the desired level. The absolute maximum output voltage level that can be reached will depend on several factors such as the load current, the capacitance C of the capacitor 52 and the induction L of the inductor 51, the loss-factor of the inductor, the "on"-resistance of the NDMOS transistor and the breakdown voltage of the transistor 54 and the diode 55.

In a further aspect of the invention, features are presented which prevent occurrence of oscillations of the source-drain voltage of the NDMOS output transistor 54 in the charge pump 10 for certain combinations of parameter values and load impedance types. As the generator tries to maintain the output voltage at a well-defined level, the charge pump 10 is periodically activated and disabled at a very high speed, resulting in an instability. This could cause breakdown of the output transistor 54 and total failure of the high-voltage generator.

To avoid this problem, the possibility of providing hysteresis in the output voltage is presented in the device. This is realized by making the reference current 130 slightly adaptable, meaning within a certain range, based on the input voltage 120 of said high voltage generating component. Said range for adapting must be smaller than the level of the basic current with the smallest level. In this way, the charge pump remains in the activated or disabled state for a longer period of time, thereby preventing all kinds of instabilities.

A block diagram of the HV-generator including a hysteresis block 65 is shown in Fig. 4. By the use of the voltage to current converter 43, 4 current sources I₀/2 till I₀/16, further denoted secondary basic currents, are converted into a current 201, having 1 out of 16 linearly distributed current levels controlled by the digital input bits H₀ till H₃. This current 201 is constructed by the use of multiplication means 62 and summing means 210. The resulting current 201 is then multiplied (using multiplicaton means 61) by the logical output bit of the current comparator 50. If the output state of the current comparator 50 is a logical "1" (meaning that the generator's output voltage is too low), then this current level 201 will be added 300 to the first internal current controlled by the bits B₀ till B₃. As a consequence, the output voltage 100 will rise up to a level that is proportional to the B-controlled current plus the H-controlled current. As soon as this level is reached, the output state of the current comparator 50 changes to a logical "0", the charge pump 10 is disabled and the output voltage starts to drop. At the same time, the current from the H-block is no longer added to the current from the B-block, and consequently, the generator's output voltage 100 will decrease until a level that is proportional to the B-controlled current only. When this occurs, the current comparator state changes, and the generator's output voltage will start to rise again. This means that the generator's output voltage 100 will exhibit a ripple of which the peak-to-peak amplitude is proportional to the H-controlled current. So, we obtain 16 linearly distributed values for the hysteresis voltage. From the choice of the internal current sources, it can be seen that the maximum value of the hysteresis voltage is a little bit less than the minimum step size (actually 15/16 LSB (Least Significant Bit)) of the programmable output voltage. If one chooses the circuit parameters in such a way that a linear control of the output voltage between 0V and 100V is obtained, than one can control the hysteresis voltage in an equally linear way in the range from 0V to 6.25V.

Another extra feature concerns once again stability problems, but this time in the voltage-to-current converter 42 for transforming the reference voltage 41 into the I₀-related currents. There can exist a very delicate equilibrium in the feedback loop of this voltage-to-current converter. This is solved by optimizing the circuit for obtaining maximum phase margin, small transistor parameter deviations (differences between the real parameter values and the simulation model values) and the possibility of connecting an external passive compensation network to one of the important nodes of the voltage-to-current converter to ensure perfect stability.

Equally according to the present invention a flexible method for generating a high voltage output is presented. Said method is flexible because a variable high output voltage is selected by inputting a digital input signal, further used for constructing a reference current as a (linear) combination of basic currents with substantially different current values wherein each of said basic currents is being selected to be part of said (linear) combination according to said digital input signal. Said method is further **characterised in that** a feedback loop is present, meaning that the generating of the output voltage is related to an input voltage constructed by comparing said reference current with a feedback current being related said output voltage.

Finally according to the present invention, the use of a high voltage apparatus, more in particular the selection of said variable output voltage, based on a digital input, is presented.

### Examples

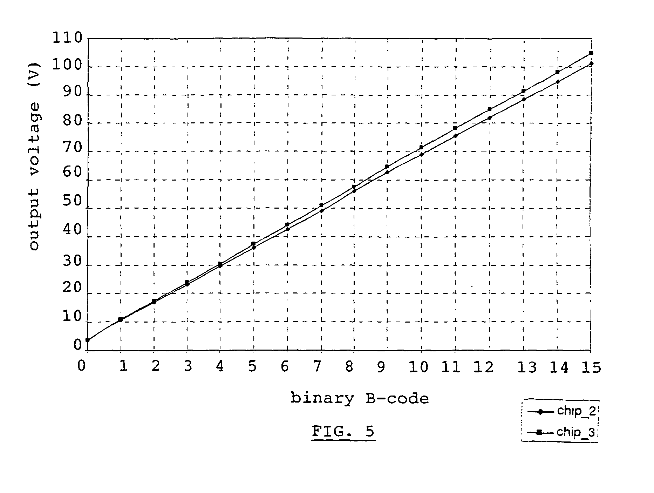

The test chip, containing the 4 different high-voltage generators, has a total silicon area of approximately 10 mm² and was fabricated in a 100V 0.7µm CMOS I²T technology, using the EUROPRACTICE MPW (Multi Project Wafer) service. 54 samples were made, of which 10 were packaged in a 48-pins DIL ceramic carrier and 44 were naked dies. In order to verify whether these HV-generators operate as predicted by the simulations, a series of measurements were carried out on 5 of the 10 packaged samples. Table I gives the values of the measured output voltage as a function of the B-code (i.e. the 4-bit digital word B₃B₂B₁B₀) for the complete high-voltage generator of Fig. 4. The H-code (i.e. the 4-bit digital code H₃H₂H₁H₀) was chosen to be "0" (meaning that the generator operates without any additional hysteresis), and the external component parameters were: L=200µH, C=15nF, load=3.5MΩ, oscillator frequency =157kHz, oscillator duty ratio = 75%, battery voltage =3V. The table I contains the output voltage values of the chips numbers 2 and 3, being the extreme corners of the 5 samples. This means that the output voltage of the other 3 samples always lies within the interval delimited by the values of the samples 2 and 3. These data are shown graphically in Fig. 5. From these measurement data, one can already conclude that the experimental output voltage range is indeed very close to the desired 100V-range. It is also very clear that the output voltage can be controlled in an almost perfectly linear way by means of the digital input bits B₀, B₁, B₂ and B₃, and one can also observe that the output voltage is fairly device-independent and therefore reproducible. The same kind of experiment was also performed on the high-voltage generator configuration of Fig.2 (i.e. without the hysteresis block).

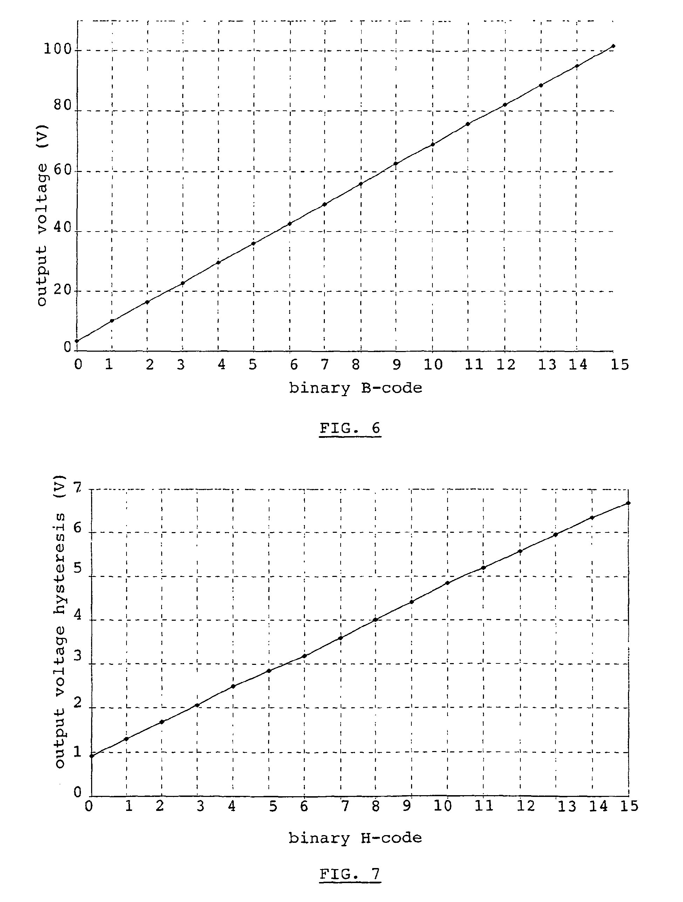

Fig. 6 shows an example of the measurement of the output voltage vs. the binary B-code for such a generator. Also here, the excellent linearity and the desired 100V output voltage operation can easily be observed. By means of the input bits H₀ till H₃, the ripple of the generator's output voltage can be digitally controlled and set to 16 linearly distributed values. Fig. 7 shows the measured output voltage ripple (peak-to-peak value) as a function of the binary H-code for the HV-generator configuration of Fig.4 when the output voltage is set to about 57V (B=8).

The external component parameters are still the same as for the previously mentioned experiments. From this plot it can be seen that a linear control of the output voltage hysteresis is obtained. Theoretically, for H=0 the output voltage ripple should be zero, but the measurements indicate that a minimum ripple of about 900mV is present. This is a result of the fact that the on-chip feedback control circuitry cannot respond at an infinite speed to changes in the output voltage. So, due to this internal speed limitation, a minimum output voltage ripple will always be detected. Of course, the exact value of this minimum ripple will highly depend on external component parameters, such as the value of the output capacitor, the inductor and the oscillator frequency. By an appropriate choice of these parameters, an arbitrary small output voltage ripple (at H=0) can be obtained. The objective of the hysteresis module in the HV-generator block diagram of Fig. 3 was to prevent dangerous oscillations at the drain terminal of the NDMOS output transistor for certain combinations of parameter values and load impedance types.

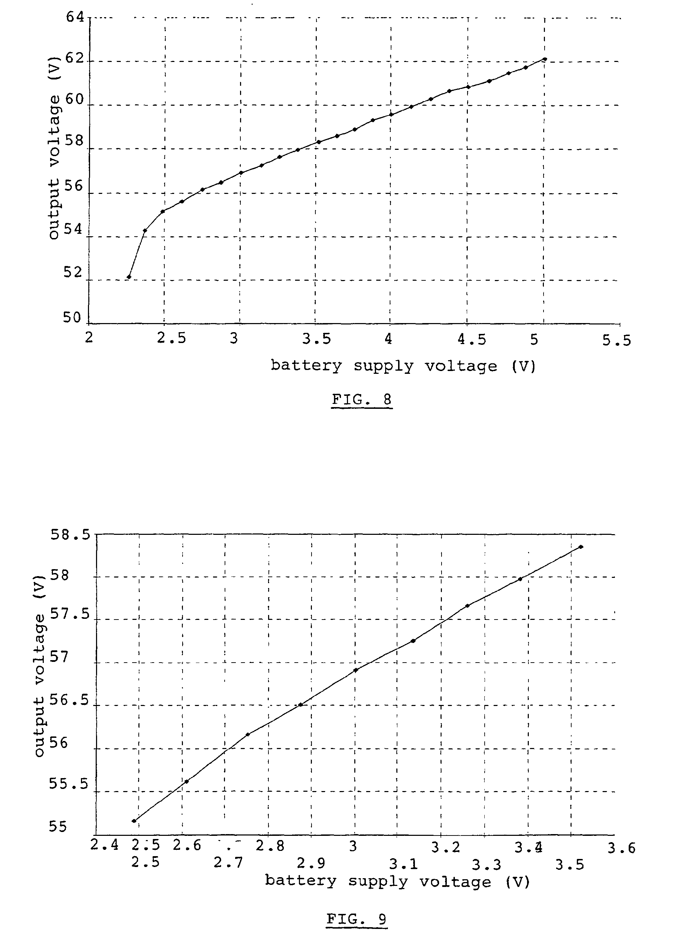

A very important characteristic of this high-voltage generator is its power supply rejection ratio. The circuit should be able to produce a stable and well-defined output voltage, even if there is a significant drop of the battery voltage. To determine this parameter, one measures the output voltage of the HV-generator from Fig. 4 as a function of the battery supply voltage for B=8 and H=0. The values of the external components were: L=200µH, C=15nF, load=3.5MΩ, oscillator frequency =157kHz, oscillator duty ratio =75%. Fig. 8 shows the results of the measurements for a battery supply voltage between 2.25V (below this voltage the generator doesn't work anymore) and 5V (higher supply voltages may cause breakdown of the internal transistors). Here a 3V battery supply is used, and hence only the range from 2.5V to 3.5V is of interest in the case considered here. This range includes the possible peak voltage in case of a "fresh" battery, as well as the voltage level of a nearly empty battery. This 2.5V ↔ 3.5V battery voltage range and the corresponding generator's output voltage are shown in detail in Fig. 9.

From Fig. 9 one learns that a battery voltage variation of 1V around the nominal 3V-value causes an output voltage variation of about 3V around a nominal value of approximately 56.9V. In other words, a battery supply voltage variation of ±16.7% results in an output voltage variation of only ±2.6%. This is a clear illustration of the good quality of the internal voltage reference. In the design of this high-voltage generator, it was also of the utmost importance to make the output resistance of the generator as low as possible, meaning that the circuit should be able to produce an output voltage that is nearly independent of the output current. To find out whether the circuit meets this requirement, one measures the output voltage as a function of the load current in the HV-generator configuration of Fig. 4 with B=8 and H=0. The values of the external component parameters were: C=15nF, oscillator frequency =166kHz, oscillator duty ratio =75%, battery voltage =3V. For the external inductor, 2 different values have been chosen: L=100µH and L=200µH.

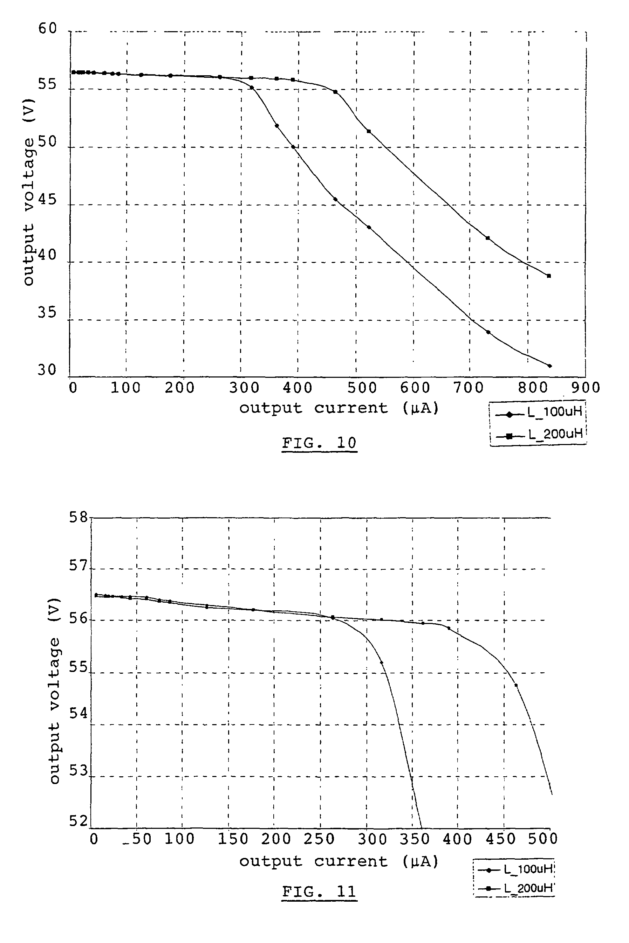

Fig. 10 and Fig. 11 (detail) show the results of this experiment. In these graphs, it is seen that the output voltage remains almost constant for increasing values of the load current until a critical current level is reached. From that moment on, the output voltage begins to drop rapidly as the current increases. The reason for this rapid voltage drop is very obvious : at high load current levels, the periodic injection of charge from the inductor into the output capacitor can no longer compensate the continuous loss of charge due to the load current, and hence the output voltage can no longer be pumped up to the desired level. For an external inductor of 100µH, the output voltage is fixed at a nearly constant level for load currents below about 300µA, while a stable output voltage is obtained for current levels up to about 400µA if a 200µH external inductor is used.

This illustrates very clearly how the properties of this high-voltage generator can be adjusted and tuned by choosing adequate values of the external components. In this way, by tuning the external inductor, the oscillator frequency and the oscillator duty ratio, an output current range (with stable output voltages) in excess of 1mA can be achieved.

Another important figure of merit in high-voltage generator design is the power efficiency of the circuit, defined as the ratio between the useful output power and the total amount of power supplied by the battery.

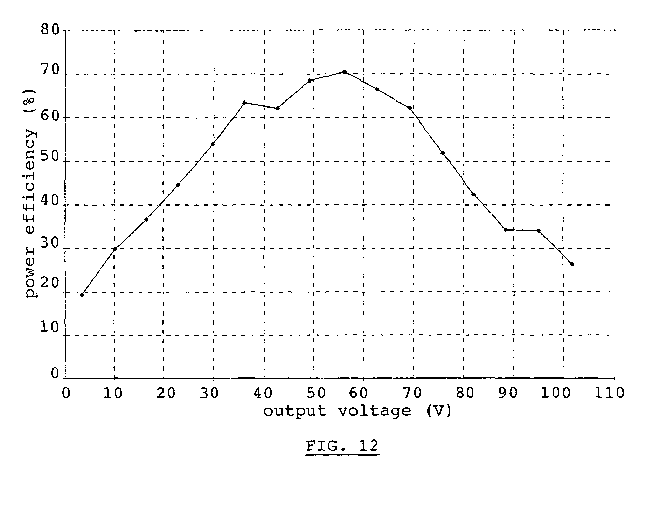

Fig. 12 gives an example of the measured power efficiency as a function of the generated output voltage for the circuit configuration of Fig. 2. The external component parameters were: L=470µH, C=15nF, load current =250µA, battery voltage =3V, oscillator frequency =114kHz, oscillator duty ratio =75%. One observes that a maximum power efficiency of about 70% is achieved at an output voltage level of approximately 55V. This maximum can easily be shifted towards lower or higher voltage levels by choosing appropriate values for the external components.

One can conclude that a digitally programmable high voltage output (e.g. 0-100V) is obtained starting from a small basic voltage, meaning the power supply, (e.g. a 3V battery power supply) with excellent linearity and reproducibility. A programmable hysteresis of the generator's output voltage with a very good linearity is demonstrated. The power supply rejection ratio is very good: the relative output voltage variations are 6.4 times smaller than the relative battery supply voltage variations around the nominal 3V-value. The output voltage remains almost constant for output currents ranging from 0 to several hundreds of microAmps. By an appropriate choice of the external components, this output current range can be extended to more than 1mA. Power efficiencies of 70% are obtained. This value can be increased to 90% by using improved low-loss external inductors and by increasing the channel width of the output transistor.

**Table I**

| | Output voltage (V) | |
|---|---|---|
| B-code | chip 2 | chip 3 |
| 0 | 3.74 | 3.62 |
| 1 | 10.76 | 10.9 |
| 2 | 16.9 | 17.53 |
| 3 | 23.17 | 23.95 |
| 4 | 29.57 | 30.44 |
| 5 | 36.13 | 37.21 |
| 6 | 42.64 | 44.08 |
| 7 | 49.12 | 50.85 |
| 8 | 56.14 | 57.74 |
| 9 | 62.85 | 64.79 |
| 10 | 69.17 | 71.56 |
| 11 | 75.59 | 78.2 |
| 12 | 82.05 | 84.85 |
| 13 | 88.59 | 91.41 |
| 14 | 94.7 | 98.14 |
| 15 | 101.1 | 104.7 |

## Claims

1. A high voltage generating device (10) for generating a selectable output voltage (100) comprising a high voltage generating component (10) having as input a logical voltage signal (120) constructed at least by comparing a reference current (130) and a feedback current (110), said feedback current being related to the output voltage (100) generated by said high voltage generating component (10), **characterized in that** the output voltage is selectable by constructing said reference current (130) as a combination of a plurality of basic currents based on a first digital input (140) and by adding a second reference current component based on a second digital input (141), where in use, the second reference current component is adapted depending on the state of said logical voltage signal (120).

2. The device recited in claim 1, comprising a voltage to current convertor (20), generating said feedback current (110) on the basis of said output voltage (100).

3. The device recited in claims 1 and 2, comprising a current comparator (50) generating said voltage signal (120) by comparing said reference current (130) and said feedback current (110).

4. The device recited in any one of claims 1 to 3, wherein said high voltage generating component (10) is a charge pump.

5. The device recited in claim 4, comprising an external inductance (51), an external capacitance (52), and an external oscillator (53).

6. The device recited in any one of the preceding claims, wherein said combination is a linear combination.

7. The device recited in claim 4 or 5, comprising circuitry (40) wherein each of said plurality of basic currents is selected to be part or not to be part of said combination, based on a digital input (140) to said circuitry.

8. The device recited in claim 7, wherein said circuitry (40) comprises :
- a voltage to current converter (42) to provide basic currents (I₀, 2I₀, 4I₀, 8I₀) based on a voltage reference (41),
- means (60) for multiplying said basic currents with a coefficient, said coefficient being the logical value of one of a first set (140) of input control bits (B₀, B₁, B₂, B₃).
- means (200) for summing said basic currents after said multiplying, said summing resulting in said reference current (130).

9. The device recited in any one of the preceding claims, wherein said reference current (130) is adaptable according to said voltage signal (120) within a range being smaller than the current level of the basic current with the smallest level.

10. The device recited in any one of the preceding claims, comprising a hysteresis block, said block comprising :
- a voltage to current converter (43) for providing a plurality of basic currents (I₀/2, I₀/4, I₀/8, I₀/16),
- means (62) for multiplying said basic currents with a coefficient, said coefficient being the logical value of one of a second set (141) of input control bits (H₀, H₁, H₂, H₃),
- means (210) for summing up said basic currents after said multiplying,
- means (61) for multiplying said summed current (201) with a coefficient, said coefficient being the digital output of said current comparator (50),
- means (300) for adding said current after said multiplying to said reference current (130).

11. A device as recited in any one of claims 1 to 10, said device being designed and fabricated in a 100V c07 I²T technology.

12. A method using the device of any of the preceding claims for generating a selectable output voltage comprising the steps of:
- inputting a digital input signal (140),
- constructing a reference current (130) as a combination of basic currents (I₀, 2I₀, 4I₀, 8I₀) with different current values wherein each of said basic currents is selected to be part or not to be part of said combination on the basis of said digital input signal (140), and,
- adding a second reference current component based upon a second digital input (141) which is adapted depending on the state of the logical voltage signal (120),
- generating an output voltage (100) at said high voltage generating compound (10), wherein said logical input voltage (120) being constructed by comparison of said reference current (130) with a feedback current (110) being related to said output voltage (100) through a current converter (20).

## Patentansprüche

1. Vorrichtung (10) zum Erzeugen einer hohen Spannung, zum Erzeugen einer wählbaren Ausgangsspannung (100), ein Bauteil (10) zum Erzeugen einer hohen Spannung umfassend, welches, als Eingabe ein Logik-Spannungssignal (120) aufweist, das wenigstens durch Vergleichen eines Referenzstroms (130) und eines Rückkopplungsstroms (110) hergestellt wird, wobei der besagte Rückkopplungsstrom in einer Beziehung steht zur Ausgangsspannung (100), welche durch das besagte Bauteil (10) zum Erzeugen einer hohen Spannung erzeugt wird, **dadurch gekennzeichnet, dass** die Ausgangsspannung wählbar ist, durch Herstellen des besagten Referenzstroms (130) als eine Kombination mehrerer Elementarströme, auf Basis einer ersten digitalen Eingabe (140), und durch Addieren einer zweiten Referenzstromkomponente auf Basis einer zweiten digitalen Eingabe (141), wobei, in Verwendung, die zweite Referenzstromkomponente eingestellt wird, abhängig vom Zustand des besagten Logik-Spannungssignals (120).

2. Vorrichtung nach Anspruch 1, einen Spannungs-Strom-Wandler (20) umfassend, welcher den besagten Rückkopplungsstrom (110) erzeugt, auf Basis der besagten Ausgangsspannung (100).

3. Vorrichtung nach Anspruch 1 und 2, einen Stromkomparator (50) umfassend, welcher das besagte Spannungssignal (120) erzeugt, durch Vergleichen des besagten Referenzstroms (130) und des besagten Rückkopplungsstroms (110).

4. Vorrichtung nach irgendeinem der Ansprüche 1 bis 3, wobei das besagte Bauteil (10) zum Erzeugen einer hohen Spannung ein Step-Up-Konverter ist.

5. Vorrichtung nach Anspruch 4, eine externe Induktivität (51), eine externe Speicherfähigkeit (52) und einen externen Oszillator (53) umfassend.

6. Vorrichtung nach irgendeinem der vorhergehenden Ansprüche, wobei die besagte Kombination eine lineare Kombination ist.

7. Vorrichtung nach Anspruch 4 oder 5, eine Schaltung (40) umfassend, wobei jeder der besagten mehreren Elementarströme ausgewählt wird, entweder Teil oder nicht Teil der Kombination zu sein, auf Basis einer digitalen Eingabe (140) in die besagte Schaltung.

8. Vorrichtung nach Anspruch 7, wobei die besagte Schaltung (40) umfasst:
- einen Spannungs-Strom-Wandler (42) zum Bereitstellen von Elementarströmen (I₀, 2I₀, 4I₀, 8I₀) auf Basis einer Spannungsreferenz (41),
- Mittel (60) zum Multiplizieren der Elementarströme mit einem Koeffizienten, wobei dieser Koeffizient der Logikwert eines Steuerbits aus einem ersten Satz (140) eingegebener Steuerbits (B₀, B₁, B₂, B₃) ist,
- Mittel (200) zum Summieren der besagten Elementarströme nach dem besagten Multiplizieren, wobei das besagte Summieren den besagten Referenzstrom (130) ergibt.

9. Vorrichtung nach irgendeinem der vorhergehenden Ansprüche, wobei der besagte Referenzstrom (130) einstellbar ist, entsprechend dem besagten Spannungssignal (120), innerhalb eines Bereichs, welcher niedriger ist als der Strompegel des Elementarstroms mit dem niedrigsten Pegel.

10. Vorrichtung nach irgendeinem der vorhergehenden Ansprüche, einen Hystereseblock umfassend, wobei der Block umfasst:
- einen Spannungs-Strom-Wandler (43) zum Bereitstellen mehrerer Elementarströme (I₀/2, I₀/4, I₀/8, I₀/16),
- Mittel (62) zum Multiplizieren der Elementarströme mit einem Koeffizienten, wobei dieser Koeffizient der Logikwert eines Steuerbits aus einem zweiten Satz (141) eingegebener Steuerbits (H₀, H₁, H₂, H₃) ist,
- Mittel (210) zum Summieren der besagten Elementarströme nach dem besagten Multiplizieren,
- Mittel (61) zum Multiplizieren des besagten summierten Stroms (201) mit einem Koeffizienten, wobei dieser Koeffizient die digitale Ausgabe des besagten Stromkomparators (50) ist,
- Mittel (300) zum Addieren des besagten Stroms nach dem besagten Multiplizieren mit dem besagten Referenzstrom (130).

11. Vorrichtung nach irgendeinem der Ansprüche 1 bis 10, wobei diese Vorrichtung gemäß einer Technologie 100V c07 I²T gestaltet und hergestellt ist.

12. Verfahren, welches die Vorrichtung zum Erzeugen einer wählbaren Ausgangsspannung nach irgendeinem der vorhergehenden Ansprüche verwendet, umfassend die Schritte:
- Eingeben eines digitalen Eingangssignals (140),
- Herstellen eines Referenzstroms (130) als eine Kombination von Elementarströmen (I₀, 2I₀, 4I₀, 8I₀) mit unterschiedlichen Stromwerten, wobei jeder der besagten mehreren Elementarströme ausgewählt wird, entweder Teil oder nicht Teil der Kombination zu sein, auf Basis des digitalen Eingangssignals (140), und
- Addieren einer zweiten Referenzstromkomponente auf Basis einer zweiten digitalen Eingabe (141), welche eingestellt wird, abhängig von Zustand des Logik-Spannungssignals (120),
- Erzeugen einer Ausgangsspannung (100) an dem besagten Bauteil (10) zum Erzeugen einer hohen Spannung, wobei die besagte Logik-Eingangspannung (120) hergestellt wird durch Vergleichen des besagten Referenzstroms (130) mit einem Rückkopplungsstrom (110), welcher in einer Beziehung steht zu der besagten Ausgangsspannung (100), durch einen Stromwandler (20).

## Revendications

1. Dispositif de génération de haute tension (10) pour générer une tension de sortie (100) ajustable comprenant un composant générateur de haute tension (10) ayant en tant qu'entrée un signal de tension logique (120) créé au moins en comparant un courant de référence (130) et un courant de rétroaction (110), ledit courant de rétroaction étant lié à la tension de sortie (100) générée par ledit composant générateur de haute tension (10), **caractérisé en ce que** la tension de sortie est ajustable en créant ledit courant de référence (130) comme une combinaison d'une pluralité de courants de base sur la base d'une première entrée numérique (140) et par l'ajout d'une deuxième composante de courant de référence sur la base d'une deuxième entrée numérique (141), dans lequel, en utilisation, la deuxième composante de courant de référence est adaptée en fonction de l'état dudit signal de tension logique (120).

2. Dispositif selon la revendication 1, comprenant un convertisseur tension-courant (20), générant ledit courant de rétroaction (110) sur la base de ladite tension de sortie (100).

3. Dispositif selon les revendications 1 et 2, comprenant un comparateur de courant (50) générant ledit signal de tension (120) en comparant ledit courant de référence (130) et ledit courant de rétroaction (110).

4. Dispositif selon l'une quelconque des revendications 1 à 3, dans lequel ledit composant générateur de haute tension (10) est une pompe de charge.

5. Dispositif selon la revendication 4, comprenant une inductance externe (51), une capacité externe (52) et un oscillateur externe (53).

6. Dispositif selon l'une quelconque des revendications précédentes, dans lequel ladite combinaison est une combinaison linéaire.

7. Dispositif selon la revendication 4 ou 5, comprenant un ensemble de circuits (40), dans lequel chacun de ladite pluralité de courants de base est sélectionné pour faire partie ou ne pas faire partie de ladite combinaison, sur la base d'une entrée numérique (140) vers ledit ensemble de circuits.

8. Dispositif selon la revendication 7, dans lequel ledit ensemble de circuits (40) comprend :
- un convertisseur tension-courant (42) pour fournir des courants de base (I₀, 2I₀, 4I₀, 8I₀) sur la base d'une référence de tension (41),
- des moyens (60) pour multiplier lesdits courants de base par un coefficient, ledit coefficient étant la valeur logique de l'un d'un premier ensemble (140) de bits de commande d'entrée (B₀, B₁, B₂, B₃).
- des moyens (200) pour sommer lesdits courants de base après ladite multiplication, ladite sommation résultant en ledit courant de référence (130).

9. Dispositif selon l'une quelconque des revendications précédentes, dans lequel ledit courant de référence (130) est adaptable conformément audit signal de tension (120) dans une plage qui est inférieure au niveau de courant du courant de base avec le niveau le plus faible.

10. Dispositif selon l'une quelconque des revendications précédentes, comprenant un bloc d'hystérésis, ledit bloc comprenant :
- un convertisseur tension-courant (43) pour fournir une pluralité de courants de base (I₀/2, I₀/4, I₀/8, I₀/16),
- des moyens (62) pour multiplier lesdits courants de base par un coefficient, ledit coefficient étant la valeur logique de l'un d'un deuxième ensemble (141) de bits de commande d'entrée (H₀, H₁, H₂, H₃).
- des moyens (210) pour sommer lesdits courants de base après ladite multiplication,
- des moyens (61) pour multiplier ledit courant sommé (201) par un coefficient, ledit coefficient étant la sortie numérique dudit comparateur de courant (50),
- des moyens (300) pour ajouter ledit courant après ladite multiplication audit courant de référence (130).

11. Dispositif selon l'une quelconque des revendications 1 à 10, ledit dispositif étant conçu et fabriqué dans une technologie I²T c07 100 V.

12. Procédé utilisant le dispositif selon l'une quelconque des revendications précédentes pour générer une tension de sortie ajustable comprenant les étapes consistant à :
- appliquer un signal d'entrée numérique (140),
- créer un courant de référence (130) comme une combinaison de courants de base (I₀, 2I₀, 4I₀, 8I₀) avec différentes valeurs de courant, dans lequel chacun desdits courants de base est sélectionné pour faire partie ou ne pas faire partie de ladite combinaison sur la base dudit signal d'entrée numérique (140), et
- ajouter une deuxième composante de courant de référence sur la base d'une deuxième entrée numérique (141) qui est adaptée en fonction de l'état du signal de tension logique (120),
- générer une tension de sortie (100) au niveau dudit composant générateur de haute tension (10), dans lequel ladite tension d'entrée logique (120) est créée en comparant ledit courant de référence (130) avec un courant de rétroaction (110) qui est lié à ladite tension de sortie (100) par l'intermédiaire d'un convertisseur de courant (20).
